# FASCICULE DE BREVET EUROPEEN

(11) **EP 1 696 720 B1**
(45) Date de publication et mention de la délivrance du brevet: **05.03.2008**
(21) Numéro de dépôt: 04816541.9
(22) Date de dépôt: 14.12.2004
(51) Int. Cl.: A01D 84/00

(54) **MACHINE DE FENAISON AVEC UN BATI ARTICULE**
HEUERNTEMASCHINE MIT EINEM GELENKIGEN RAHMEN
HAY-HARVEST MACHINE PROVIDED WITH A HINGED FRAME

(30) Priorité: 19.12.2003 FR 0315016
(43) Date de publication de la demande: 06.09.2006
(73) Titulaire: KUHN S.A., 67706 Saverne Cedex (FR)
(72) Inventeur: GEISER, Jens, 38173 Dettum (DE)
(74) Mandataire: Andres, Jean-Claude
(86) Numéro de dépôt international: PCT/FR2004/050687
(87) Numéro de publication internationale: WO 2005/060730

(56) Documents cités:
- EP-A- 0 559 024
- EP-A- 1 095 556
- CH-A- 377 572
- FR-A- 2 835 693
- US-A- 5 201 167
- US-A- 5 544 475

## Description

La présente invention se rapporte à une machine de fenaison selon le preambule de la revendication 1 comportant un bâti qui est constitué par une poutre longitudinale, un dispositif d'attelage qui est articulé sur la poutre au moyen d'un axe sensiblement vertical et par une traverse qui est fixée à la poutre et qui porte des roues d'appui au sol, lequel bâti porte au moins un organe de travail apte à déplacer des végétaux ou d'autres produits couchés sur le sol.

Une machine de ce genre comme décrite dans US 5 544 475, est par exemple utilisée pour andainer du fourrage ou déplacer et/ou regrouper des andains déjà formés. Cette machine est alors accrochée à l'arrière d'un tracteur qui permet d'animer ses organes de travail et de la déplacer sur le terrain. Il arrive fréquemment que durant le déplacement ou le groupage d'andains, les roues du tracteur roulent sur les andains qui doivent être repris par les organes de travail de la machine. Ces roues écrasent alors le fourrage, ce qui peut nuire à sa qualité. En effet, sous la pression des pneus, il peut s'effriter et perdre des parties nutritives. Il peut également être souillé avec de la terre, suite à la pression contre la surface du sol.

La présente invention a pour but de remédier à l'inconvénient précité.

Elle doit notamment permettre de faire toujours suivre à la machine une trajectoire de travail idéale sans que les roues du tracteur ne soient obligées de rouler sur les andains.

Pour resoudre ce problème, l'invention propose une machine de fenaison comme elle est caractérisée dans la revendication 1.

A cet effet, une importante caractéristique de l'invention consiste en ce que la poutre longitudinale du bâti est réalisée en au moins deux parties qui sont articulées entre elles au moyen d'au moins un axe sensiblement vertical permettant de déplacer une des parties par rapport à l'autre, que le dispositif d'attelage est articulé sur la partie qui est la plus en avant, que la traverse avec les roues et le ou les organes de travail sont portés par la partie la plus en arrière et que le ou les organes de travail sont déplaçables avec ladite partie arrière autour de l'axe d'articulation sensiblement vertical dans différentes positions de travail obtenues par pivotement de la partie avant autour de son axe d'articulation avec le dispositif d'attelage.

Cet agencement permet de décaler latéralement tous les organes de travail de la machine par rapport à l'axe médian du tracteur. Il est ainsi possible de faire passer les roues du tracteur à côté des andains pour éviter leur écrasement, tout en conservant aux organes de travail de la machine une bonne position par rapport auxdits andains en vue de leur reprise.

Une autre caractéristique importante de l'invention consiste en ce qu'au moins un vérin hydraulique est relié à chaque partie de la poutre longitudinale du bâti en vue du réglage de la position de la machine par rapport à l'axe médian du tracteur.

Selon une autre caractéristique importante de l'invention la machine comporte un mécanisme de commande des roues d'appui au sol qui s'étend du dispositif d'attelage jusqu'aux dites roues et qui comporte une articulation au niveau de l'axe d'articulation entre les deux parties de la poutre du bâti. Ce mécanisme permet de commander les roues d'appui afin qu'elles suivent parfaitement la trajectoire du tracteur dans toutes les positions qu'elle peut occuper par rapport audit tracteur.

D'autres caractéristiques et avantages de l'invention ressortiront de la description qui va suivre et qui se réfère aux dessins annexés qui représentent, à titre d'exemple non limitatif, une forme de réalisation de la machine selon l'invention.

Dans ces dessins :
- la figure 1 représente une vue de dessus d'une machine selon l'invention dans une première position de travail,
- la figure 2 représente une vue de dessus de la machine selon l'invention dans une autre position de travail,
- la figure 3 représente à plus grande échelle une vue de détail de l'articulation entre deux parties de la poutre du bâti de la machine.

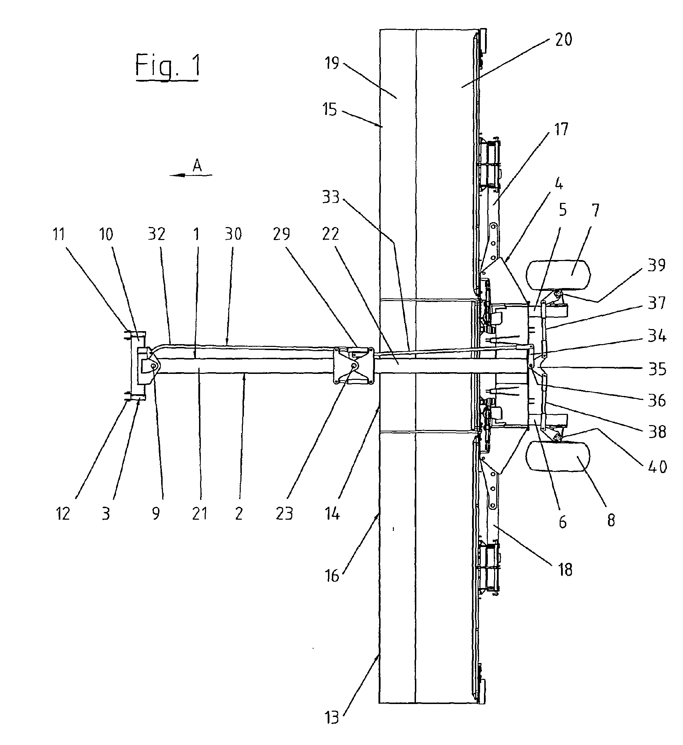

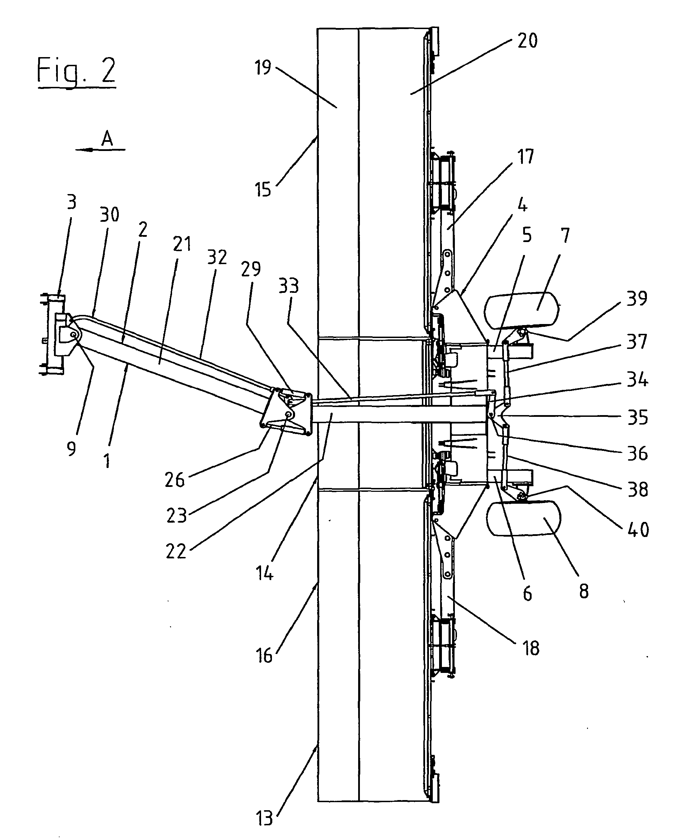

Telle qu'elle est représentée sur les figures 1 et 2, la machine selon l'invention comporte un bâti (1) qui est constitué par une poutre longitudinale (2), un dispositif d'attelage (3) et une traverse (4) qui est munie de bras (5 et 6) portant des roues (7 et 8) d'appui au sol. Le dispositif d'attelage (3) est articulé sur l'extrémité avant de la poutre (2) au moyen d'un axe (9) sensiblement vertical. Il se compose d'une barre (10) sensiblement horizontale munie de deux points d'accrochage (11 et 12) à un tracteur permettant d'animer et de déplacer la machine dans la direction d'avancement (A). La traverse (4) est fixée à l'extrémité arrière de la poutre (2).

Le bâti (1) porte des organes de travail (13) aptes à déplacer des végétaux ou d'autres produits couchés sur le sol. Dans l'exemple représenté, ces organes de travail (13) sont constitués par un ensemble de ramassage et de déplacement central (14) qui est relié à la traverse (4) et deux ensembles de ramassage et de déplacement latéraux (15 et 16). Ces ensembles latéraux (15 et 16) sont portés par des bras (17 et 18) qui sont également reliés à la traverse (4). Chacun de ces ensembles (14, 15, 16) se compose d'un pick-up (19) qui ramasse les produits couchés sur le sol et d'une bande transporteuse (20) qui reçoit lesdits produits et les déplace latéralement. Le sens de déplacement de ces bandes transporteuses (20) est avantageusement modifiable. Les produits peuvent ainsi être déplacés vers l'un quelconque des côtés de la machine en vue de la formation d'andains ou du regroupement d'andains. L'animation de ces pick-up (19) et bandes transporteuses (20) peut être assurée mécaniquement ou hydrauliquement depuis le tracteur.

Les organes de travail (13) peuvent être différents de ceux décrits ci-dessus. Ils peuvent ainsi également être constitués par un ou plusieurs rotors d'andainage du type pouvant être entraînés en rotation autour d'un axe sensiblement vertical et comportant des bras porteurs de fourches.

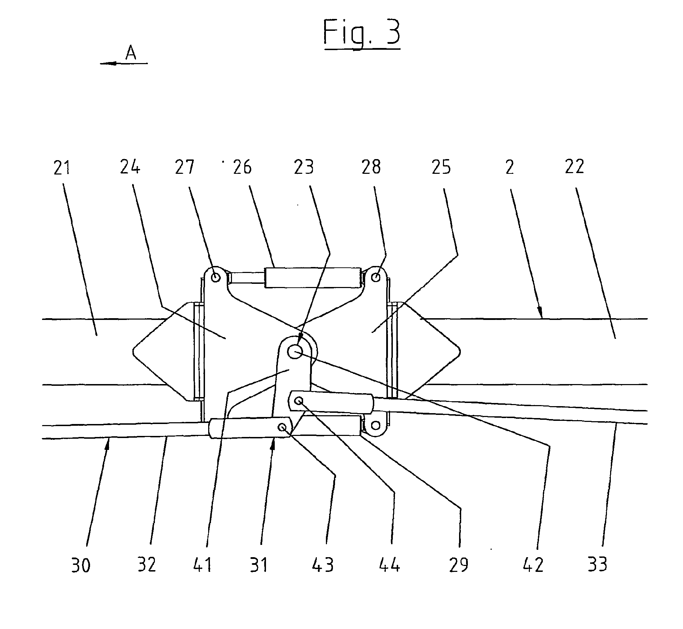

La poutre (2) du bâti (1) est réalisée en au moins deux parties (21 et 22) situées l'une derrière l'autre, la partie (21) la plus en avant portant le dispositif d'attelage (3) et la partie (22) la plus en arrière portant la traverse (4) avec les roues (7 et 8) et le ou les organes de travail (13). Ces deux parties (21 et 22) sont articulées, entre elles au moyen d'au moins un axe (23) sensiblement vertical qui permet de pivoter une partie par rapport à l'autre. A cet effet, les extrémités voisines desdites parties (21 et 22) sont réalisées en forme de chapes (24 et 25) à travers lesquelles passe l'axe d'articulation (23) (voir figure 3).

Les deux parties (21 et 22) de la poutre (2) sont en sus reliées entre elles au moyen d'au moins un vérin hydraulique (26) permettant de déplacer la partie arrière (22) avec l'ensemble des organes de travail (13) par rapport à la partie avant (21) autour de l'axe d'articulation (23) dans différentes positions de travail obtenues par pivotement de la partie avant (21) autour de son axe d'articulation (9) avec le dispositif d'attelage (3). Ce vérin hydraulique (26) est décalé latéralement par rapport audit axe d'articulation (23). Il est lui-même articulé sur lesdites parties (21 et 22) de la poutre (2) au moyen d'axes (27 et 28) qui sont sensiblement parallèles à l'axe d'articulation (23) entre les deux parties (21 et 22). Dans le cas de l'utilisation d'un seul vérin hydraulique (26), celui-ci est de préférence à double effet

Comme cela est représenté sur les figures 1 à 3, un deuxième vérin hydraulique (29) peut relier les deux parties (21 et 22) de la poutre (2) entre-elles. Dans ce cas l'un des vérins hydrauliques (26, 29) se situe à droite et l'autre à gauche de l'axe d'articulation (23). Ces deux vérins hydrauliques (26 et 29) peuvent avantageusement être à simple effet.

Un mécanisme de commande (30) des roues d'appui (7 et 8) s'étend du dispositif d'attelage (3) jusqu'auxdites roues (7 et 8) afin de leurs faire suivre la trajectoire du tracteur dans les différentes positions de la machine. Ce mécanisme (30) comporte une articulation (31) au niveau de l'axe d'articulation (23) entre les deux parties (21 et 22) de la poutre (2). Il se compose d'une première tringle (32) qui est articulée sur le dispositif d'attelage (3) et d'une deuxième tringle (33) qui est reliée à un levier (34) solidaire d'un pivot (35) qui est articulé sur la deuxième partie (22) de la poutre (2) ou sur la traverse (4) au moyen d'un axe (36) sensiblement vertical. Ce pivot (35) est relié au moyen d'une troisième tringle (37) et d'une quatrième tringle (38) à des leviers solidaires de pivots (39 et 40) qui sont liés aux bras (5 et 6) et qui portent les roues d'appui (7 et 8). Lesdits pivots (39 et 40) sont déplaçables dans des plans horizontaux, à l'aide des tringles (37 et 38) de manière à modifier l'orientation des roues d'appui (7 et 8) par rapport au bâti (1).

L'articulation (31) entre la première tringle (32) et la deuxième tringle (33) comprend un levier (41) qui est articulé sur un axe (42) concentrique à l'axe d'articulation (23) entre les deux parties (21 et 22) de la poutre (2). Chacune desdites tringles (32 et 33) est articulée sur ce levier (41) au moyen d'un axe (43 et 44) sensiblement parallèle à l'axe (42) du levier (41). Cet agencement permet aux deux tringles (32 et 33) de suivre les deux parties (21 et 22) de la poutre (2) lorsque la position relative entre ces dernières est modifiée par pivotement autour de l'axe (23) à l'aide des vérins hydrauliques (26 et 29).

Durant le travail, la machine est accrochée à un tracteur qui permet de l'animer et de la déplacer dans la direction d'avancement (A). Les ensembles (14, 15 et 16) de ramassage et de déplacement des produits sont alors abaissés au niveau du sol et se situent sensiblement sur une ligne perpendiculaire au sens d'avancement (A). Leurs pick-up (19) sont animés de sorte qu'ils ramassent les produits tels que des végétaux couchés sur le sol et les déposent sur les bandes transporteuses (20). Celles-ci sont entraînées de sorte qu'elles déplacent ces produits latéralement, les transmettent de l'une à l'autre et les déposent sur un des côtés de la machine sous la forme d'un andain de gros volume.

Dans le cas ou les organes de travail (13) sont constitués par des rotors d'andainage ceux-ci sont abaissés au niveau du sol et sont entraînés en rotation de sorte que leurs fourches ramassent et déplacent les produits. Si la machine comporte plusieurs rotors ils peuvent former des andains individuels ou un andain commun central ou latéral.

Dans la première position de travail qui est représentée sur la figure 1, les deux parties (21 et 22) de la poutre (2) sont sensiblement alignées et la machine est centrée par rapport au tracteur. En ligne droite la machine suit fidèlement le tracteur. Lorsque le tracteur tourne, par exemple pour prendre un virage, le dispositif d'attelage (3) pivote autour de l'axe d'articulation (9) qui le relie à la poutre (2). Simultanément ledit dispositif d'attelage (3), selon qu'il pivote vers la droite ou vers la gauche, pousse ou tire sur la première tringle (32). Celle-ci transmet le mouvement par l'intermédiaire du levier (41) à la deuxième tringle (33) qui fait tourner le pivot (35) sur l'axe (36). Ce pivot (35) actionne alors les tringles (37 et 38) qui déplacent les pivots (39 et 40) avec les roues (7 et 8) dans la direction opposée à celle prise par le tracteur. Lesdites roues (7 et 8) suivent ainsi sensiblement la trajectoire des roues du tracteur, ce qui permet d'obtenir le ramassage et le déplacement de la totalité des produits se trouvant au sol.

Pour éviter que les roues du tracteur passent sur les produits à ramasser, notamment lorsque ceux-ci se trouvent déjà en petits andains, la machine peut être décalée par rapport au tracteur. Une telle position est représentée sur la figure 2. Cette position est obtenue en actionnant les vérins hydrauliques (26 et 29) pour qu'ils déplacent la partie arrière (22) de la poutre (2) autour de l'axe d'articulation (23) de telle sorte qu'elle forme un angle différent de 180° avec la partie avant (21). Durant ce pivotement le dispositif de commande (30) actionne les pivots (39 et 40) avec les roues d'appui (7 et 8) de telle sorte que celles-ci restent parallèles à la partie arrière (22). De ce fait, en avançant, les roues (7 et 8) orientent cette partie arrière (22) qui porte les organes de travail (13) dans la direction d'avancement (A) tandis que la partie avant (21) pivote autour de l'axe d'articulation (9) avec le dispositif d'attelage (3) et adopte une position oblique qui assure le décalage latéral recherché des organes de travail (13) de la machine par rapport au tracteur. Celui-ci peut alors rouler à côté des andains tandis que les organes de travail (13) restent correctement positionnés par rapport aux produits à ramasser. Ledit décalage peut être augmenté ou diminué en faisant varier l'angle entre les deux parties (21 et 22) de la poutre (2) au moyen des vérins hydrauliques (26 et 29). Dans cette position de travail décalée le dispositif de commande (30) oriente les roues d'appui (7 et 8) de la même manière que dans la position décrite ci-avant afin d'optimiser la qualité de travail.

Pour le transport, la machine est amenée dans l'alignement du tracteur et les organes de travail (13) peuvent être soulevés et repliés en vue de les dégager du sol et de réduire la largeur de la machine.

Il est bien évident que l'invention n'est pas limitée au mode de réalisation décrit et représenté sur les dessins annexés. Des modifications restent possibles, notamment en ce qui concerne la constitution des divers éléments ou par substitution d'équivalents techniques, sans sortir pour autant du domaine de protection.

## Revendications

1. Machine de fenaison comportant un bâti (1) qui est constitué par
- une poutre longitudinale (2),
- un dispositif d'attelage (3) qui est articulé sur la poutre (2) au moyen d'un axe (9) sensiblement vertical,
- une traverse (4) qui est fixée à la poutre (2) et qui porte des roues d'appui (7 et 8),
lequel bâti (1) portant au moins un organe de travail (13) apte à déplacer des végétaux ou d'autres produits couchés sur le sol,
ladite poutre (2) étant réalisée en au moins deux parties (21 et 22) situées l'une derrière l'autre et qui sont articulées entre elles au moyen d'au moins un axe sensiblement vertical (23) permettant de déplacer une des parties (21, 22) par rapport à l'autre,
ledit dispositif d'attelage (3) étant articulé sur la partie (21) qui est la plus en avant, et
ladite traverse (4) avec les roues (7 et 8) et le ou les organes de travail (13) étant portés par la partie (22) la plus en arrière, ***caractérisée par le fait***
**que** le ou les organes de travail (13) sont déplaçables avec ladite partie arrière (22) autour de l'axe d'articulation (23) dans différentes positions de travail obtenues par pivotement de la partie avant (21) autour de son axe d'articulation (9) avec le dispositif d'attelage (3) au moyen d'au moins un vérin hydraulique (26, 29) qui est relié à chaque partie (21 et 22) de la poutre (2) et qui est décalé latéralement par rapport à l'axe d'articulation (23) entre les deux parties (21 et 22) de la poutre (2).

2. Machine selon la revendication 1, ***caractérisée par le fait* que** deux vérins hydrauliques (26 et 29) à simple effet, situé l'un à droite et l'autre à gauche de l'axe d'articulation (23), sont reliés à chaque partie (21 et 22) de la poutre (2).

3. Machine selon la revendication 1, ***caractérisée par le fait* qu**'elle comporte un mécanisme de commande (30) des roues d'appui (7 et 8) au sol qui s'étend du dispositif d'attelage (3) jusqu'auxdites roues (7 et 8) et qui comporte une articulation (31) au niveau de l'axe d'articulation (23) entre les deux parties (21 et 22) de la poutre (2).

4. Machine selon la revendication 3, ***caractérisée par le fait* que** le mécanisme de commande (30) comporte une première tringle (32) qui est articulée sur le dispositif d'attelage (3) et une deuxième tringle (33) qui est reliée à un pivot (35) articulé sur le bâti (1) et auquel sont reliées une troisième et une quatrième tringles (37 et 38) qui orientent les roues (7 et 8), lesdites première et deuxième tringles (32 et 33) étant articulées l'une par rapport à l'autre au niveau de l'axe d'articulation (23) entre les deux parties (21 et 22) de la poutre (2).

5. Machine selon la revendication 4, ***caractérisée par le fait* que** la première et la deuxième tringles (32 et 33) sont articulées sur un levier (41) qui est lui-même articulé sur un axe (42) concentrique à l'axe d'articulation (23) entre les deux parties (21 et 22) de la poutre (2).

## Claims

1. Haymaking machine comprising a frame (1) that consists of
- a longitudinal beam (2),
- a hitching device (3) that is articulated on the beam (2) by means of a substantially vertical axis (9),
- a crossmember (4) that is attached to the beam (2) and that carries soil resting wheels (7 and 8),
the said frame (1) carrying at least one work member (13) capable of moving plants or other products lying on the ground,
the said beam (2) being made in at least two parts (21 and 22) that are situated one behind the other and that are articulated with one another by means of at least one substantially vertical axis (23) making it possible to move one of the parts (21, 22) relative to the other,
the said hitching device (3) being articulated on the foremost part (21),
the said crossmember (4) with the wheels (7 and 8) and the work member or members (13) being carried by the rearmost part (22),
***characterized in* that** the work member or members (13) can be moved with the said rear part (22) about the axis of articulation (23) into different work positions obtained by pivoting the front part (21) about its axis of articulation (9) with the hitching device (3) by means of at least one hydraulic cylinder (26, 29) that is connected to each part (21 and 22) of the beam (2) and that is offset laterally relative to the axis of articulation (23) between the two parts (21 and 22) of the beam (2).

2. Machine as claimed in claim 1, ***characterized in* that** two single-acting hydraulic cylinders (26 and 29), situated one on the right and the other on the left of the axis of articulation (23), are connected to each part (21 and 22) of the beam (2).

3. Machine as claimed in claim 1, ***characterized in* that** it comprises a mechanism (30) for controlling the soil resting wheels (7 and 8) that extends from the hitching device (3) to the said wheels (7 and 8) and comprises an articulation (31) at the axis of articulation (23) between the two parts (21 and 22) of the beam (2).

4. Machine as claimed in claim 3, ***characterized in* that** the control mechanism (30) comprises a first rod (32) that is articulated on the hitching device (3) and a second rod (33) that is connected to a pivot (35) articulated on the frame (1) and to which are connected a third and a fourth rod (37 and 38) that steer the wheels (7 and 8), the said first and second rods (32 and 33) being articulated one relative to the other at the level of the axis of articulation (23) between the two parts (21 and 22) of the beam (2).

5. Machine as claimed in claim 4, ***characterized in* that** the first and second rods (32 and 33) are articulated on a lever (41) that is itself articulated on an axis (42) concentric with the axis of articulation (23) between the two parts (21 and 22) of the beam (2).

## Patentansprüche

1. Heuerntemaschine mit einem Rahmen (1), bestehend aus:
- einem Längsträger (2),
- einer Anhängevorrichtung (3), die am Träger (2) mittels einer im Wesentlichen vertikalen Achse (9) angelenkt ist,
- einer Querstrebe (4), die am Träger (2) befestigt ist und die Abstützungsräder (7 und 8) trägt,
wobei der Rahmen (1) mindestens ein Arbeitselement (13) trägt, das Pflanzen oder andere am Boden liegende Produkte verschieben kann,
wobei der Träger (2) aus mindestens zwei Teilen (21 und 22) besteht, die hintereinander angeordnet und miteinander mittels mindestens einer im Wesentlichen vertikalen Achse (23) gelenkig verbunden sind, die es ermöglicht, einen der Teile (21, 22) in Bezug zum anderen zu verschieben,
wobei die Anhängevorrichtung (3) an dem vordersten Teil (21) angelenkt ist,
wobei die Querstrebe (4) mit den Rädern (7 und 8) und das oder die Arbeitselemente (13) vom hintersten Teil (22) getragen werden,
***dadurch gekennzeichnet,* dass** das oder die Arbeitselemente (13) mit dem hinteren Teil (22) um die Gelenkachse (23) in verschiedene Arbeitspositionen verschiebbar sind, die durch Schwenken des vorderen Teils (21) um seine Gelenkachse (9) mit der Anhängevorrichtung (3) mittels mindestens eines Hydraulikzylinders (26, 29) erzielt werden, der mit jedem Teil (21 und 22) des Trägers (2) verbunden und seitlich zur Gelenkachse (23) zwischen den beiden Teilen (21 und 22) des Trägers (2) versetzt ist.

2. Maschine nach Anspruch 1, ***dadurch gekennzeichnet,* dass** zwei einfachwirkende Hydraulikzylinder (26 und 29), die sich der eine rechts und der andere links der Gelenkachse (23) befinden, mit jedem Teil (21 und 22) des Trägers (2) verbunden sind.

3. Maschine nach Anspruch 1, ***dadurch gekennzeichnet,* dass** sie einen Steuermechanismus (30) für die Räder (7 und 8) zur Abstützung am Boden umfasst, der sich von der Anhängevorrichtung (3) bis zu den Rädern (7 und 8) erstreckt, und der ein Gelenk (31) im Bereich der Gelenkachse (23) zwischen den beiden Teilen (21 und 22) des Trägers (2) umfasst.

4. Maschine nach Anspruch 3, ***dadurch gekennzeichnet,* dass** der Steuermechanismus (30) ein erstes Gestänge (32), das auf der Anhängevorrichtung (3) angelenkt ist, und ein zweites Gestänge (33) umfasst, das mit einem am Rahmen (1) angelenkten Zapfen (35) verbunden ist, und mit dem ein drittes und ein viertes Gestänge (37 und 38) verbunden sind, die die Räder (7 und 8) ausrichten, wobei das erste und das zweite Gestänge (32 und 33) zueinander im Bereich der Gelenkachse (23) zwischen den beiden Teilen (21 und 22) des Trägers (2) angelenkt sind.

5. Maschine nach Anspruch 4, ***dadurch gekennzeichnet,* dass** das erste und das zweite Gestänge (32 und 33) auf einem Hebel (41) angelenkt sind, der selbst auf einer Achse (42) angelenkt ist, die zur Gelenkachse (23) zwischen den beiden Teilen (21 und 22) des Trägers (2) konzentrisch ist.
